# EUROPÄISCHE PATENTSCHRIFT

(11) **EP 1 757 835 B1**
(45) Veröffentlichungstag und Bekanntmachung des Hinweises auf die Patenterteilung: **20.08.2008**
(21) Anmeldenummer: 06025633.6
(22) Anmeldetag: 24.06.2005
(51) Int. Cl.: F16D 48/06, H02P 8/22

(54) **Verfahren zum Einstellen eines Kupplungsmoments**
Method of setting a clutch torque
Procédé de réglage de couple d'un embrayage

(30) Priorität: 10.07.2004 DE 102004033489
(43) Veröffentlichungstag der Anmeldung: 28.02.2007
(62) Teilanmeldung aus: 05013632.4
(73) Patentinhaber: LuK Lamellen und Kupplungsbau Beteiligungs KG, 77815 Bühl (DE)
(72) Erfinder: Gerhart, Jürgen, 77767 Appenweier (DE); Werner, Olaf, Dr., 77815 Bühl (DE); Göppert, Georg, 79336 Herbolzheim (DE)

(56) Entgegenhaltungen:
- EP-A- 1 270 978
- WO-A-02/101258

## Beschreibung

Die Erfindung betrifft ein Verfahren zum Einstellen des Kupplungsmoments einer insbesondere in einem Antriebsstrang eines Kraftfahrzeugs angeordneten Kupplung, wobei die Kupplung mit Hilfe eines Kupplungsaktors verstellt wird.

Ein derartiges Verfahren ist aus der Praxis bekannt. Dabei weist der Kupplungsaktor einen Servomotor auf, der als Aktorteile einen Stator mit einer Wicklung und einen Läufer mit abwechselnd in zueinander entgegengesetzte Richtungen magnetisierten Permanentmagnetsegmenten hat. Aufgrund der Permanentmagnetsegmente ergibt sich eine Rastierung der Aktorteile, d.h. die Positionen, an denen die Aktorteile im Stillstand relativ zueinander positioniert sind, sind an Rasterpunkten eines Positionsrasters angeordnet. Zum Aufeinanderzu- und Voneinanderwegbewegen der Kupplungsteile der Kupplung und somit zum Einstellen des Kupplungsmoments steht der Servomotor über ein selbsthemmendes Getriebe mit einer Ausrückeinrichtung der Kupplung in Antriebsverbindung. Zum Einstellen des Kupplungsmoments wird zunächst ein dem Kupplungsmoment entsprechender Sollwert für die Relativposition der Kupplungsteile ermittelt, der zwischen den Rasterwerten des Positionsrasters liegen kann. Dann werden die Aktorteile durch entsprechendes Bestomen der Wicklung an einem zu dem Positions-Sollwert benachbarten Rasterwert des Positionsrasters relativ zueinander positioniert. Bei Erreichen des Rasterwerts wird der Servomotor abgeschaltet und die aktuelle Position aufgrund der Selbsthemmung des Kupplungsaktors stromlos gehalten. Aufgrund der Rastierung des Kupplungsaktors lässt sich die Kupplung nur in Stufen verstellen. Dadurch wird die Einstellgenauigkeit des Kupplungsmoments begrenzt. Bei einem lagegeregelten Servomotor mit inkrementaler Positionsmessung kann die Einstellgenauigkeit des Kupplungsmoments auch durch die Auflösung der Inkremente beeinflusst werden, sofern diese Auflösung gröber ist als der Rasterabstand der Rastierungen und/oder die Rasterwerte des Positionsrasters nicht mit denjenigen der Inkrementalwegmessung übereinstimmen. Schließlich ist die Ausrückeinrichtung aufgrund der Elastizität ihrer Bauteile und der beim Verstellen auftretenden Reibung mit einer Weghysterese behaftet, die zur Folge haben kann, dass die Relativpositionierung der Aktorteile nicht oder nur teilweise in einen entsprechenden Verstellweg der Kupplung umgesetzt wird. In Abhängigkeit von dem jeweils an der Ausrückeinrichtung vorhandenen Hysteresewert und der Richtung, in welche die Relatiwerstellung der Kupplungsteile erfolgt, können daher zusätzliche Ungenauigkeiten bei der Einstellung des Kupplungsmoments auftreten.

In der WO 02/101258 A2 wird ein Verfahren zur Ermittlung der Schließstellung einer Kupplung, ein Verfahren zum Ermitteln der Betätigungskraft einer Kupplung sowie ein Verfahren zum Ermitteln der Temperatur eines Kupplungsaktors offenbart.

Es besteht deshalb die Aufgabe, ein Verfahren der zum Einstellen des Kupplungsmoments einer Kupplung zu schaffen, das eine hohe Einstellgenauigkeit des Kupplungsmoments ermöglicht.

Diese Aufgabe wird dadurch gelöst, dass die Kupplung mit Hilfe eines Kupplungsaktors verstellt wird, der mindestens zwei Aktorteile aufweist, die an Rasterwerten eines Positionsrasters relativ zueinander positionierbar sind, dass ein einem Kupplungsmoment-Sollwert entsprechender, zwischen den Rasterwerten des Positionsrasters angeordneter Positions-Sollwert für die Aktorteile ermittelt wird, dass die Aktorteile an einem zu dem Positions-Sollwert benachbarten Rasterwert des Positionsrasters relativ zueinander positioniert werden, dass zusätzlich zu dem ersten Positions-Rasterwert ein zweiter Positions-Rasterwert derart ermittelt wird, dass der Positions-Sollwert zwischen dem ersten Positions-Rasterwert und dem zweiten Positions-Rasterwert angeordnet ist, und dass die Aktorteile derart abwechselnd an dem ersten Positions-Rasterwert und dem zweiten Positions-Rasterwert positioniert werden, dass das mittlere Kupplungsmoment genauer mit dem Kupplungsmoment-Sollwert übereinstimmt, als die Kupplungsmomente des ersten und zweiten Positions-Rasterwerts.

In vorteilhafter Weise werden also während der Dauer, während der der Kupplungsmoment-Sollwert eingestellt werden soll, die Aktorteile ständig wechselweise an beidseits des eigentlich einzustellenden Positions-Sollwert angeordneten Positions-Rasterwerten relativ zueinander positioniert, so dass der Mittelwert des über diese Dauer von der Kupplung übertragen Kupplungsmoments zwischen den Kupplungsmomenten liegt, die den genannten Positions-Rasterwerten entsprechen. Das Verfahren ermöglicht dadurch gegenüber einem Verfahren, bei dem nur ein Positions-Rasterwert angesteuert wird, eine höhere Einstellgenauigkeit des Kupplungsmoments. Bei einer Kupplungseinrichtung, die in einem Antriebsstrang eines Kraftfahrzeugs angeordnet ist, wird die Frequenz, mit der die Umschaltung zwischen den beidseits des Positions-Sollwerts angeordneten Positions-Rasterwerten erfolgt, vorzugsweise derart gewählt, dass sie von der Rupffrequenz des Antriebsstrangs abweicht, damit möglichst keine Eigenfrequenzen in dem Antriebsstrang angeregt werden. Vorteilhafterweise wird die Frequenz zwischen den beiden Positions-Rasterwerten kleiner als die Rupffrequenz der Kupplung und größer als die Eckfrequenz des Gesamtsystems der Kupplungsaktorik, beispielsweise bestehend aus Antriebsmotor, hydraulische Strecke mit Geberzylinder und Nehmerzylinder sowie nachfolgender Ausrückmechanik, gewählt. Die Eckfrequenz des Gesamtsystems kann auch als inverse Antwortzeit des Gesamtsystems aufgefasst werden. Weiterhin sollte die Frequenz, mit der die Umschaltung zwischen den beidseits des Positions-Sollwerts angeordneten Positions-Rasterwerten erfolgt, höher sein als die maximale Verstellfrequenz des Komplettsystems, bestehend aus dem Kupplungsaktor, der Ausrückeinrichtung der Kupplung und einer eventuellen Signalverarbeitungseinrichtung zur Bestimmung des Positions-Sollwerts, des ersten und zweiten Positions-Rasterwerts und/oder zur Ansteuerung des Kupplungsaktors. Die maximale Frequenz, mit der die Umschaltung zwischen den beidseits des Positions-Sollwerts angeordneten Positions-Rasterwerten erfolgt, ist durch die Verstellzeit des Kupplungsaktors nach oben begrenzt.

Bei einer vorteilhaften Ausführungsform der Erfindung wird ein dem Positions-Sollwert entsprechendes Positions-Sollwertsignal generiert, wobei diesem Positions-Sollwertsignal ein einen Wechselsignalanteil enthaltendes Überlagerungssignal derart überlagert wird, dass das Summensignal aus dem Positions-Sollwertsignal und dem Überlagerungssignal im Wesentlichen in dem Positionsraster liegt, und wobei mit dem Summensignal als Sollwertsignal der Kupplungsaktor angesteuert wird. Die Amplitude der Pulsweitenmodulation kann im Rahmen der durch die Rastierungen vorgegebenen Einstellmöglichkeiten frei gewählt werden. Günstigerweise wählt man einen kleinen Wert, bei dem die durch die Pulsweitenmodulation entstehenden Schwingungen von einem im Innenraum des Kraftfahrzeugs befindlichen Benutzer der Kraftfahrzeugs nicht bemerkt werden.

Bei einer bevorzugten Ausführungsform der Erfindung wird das Überlagerungssignal in Abhängigkeit von der Lage des Positions-Sollwerts relativ zu dem ersten und zweiten Positions-Rasterwert pulsweitenmoduliert. Dadurch wird eine noch größere Einstellgenauigkeit des Kupplungsmoments ermöglicht. Es können praktisch beliebige Kupplungsmoment-Zwischenwerte zwischen den Kupplungsmomenten des ersten und zweiten Positions-Rasterwerts eingestellt werden.

Bei einer zweckmäßigen Ausgestaltung der Erfindung wird das Überlagerungssignal mit konstanter Periodendauer pulsweitenmoduliert, wobei das Puls-Pausen-Verhältnis in Abhängigkeit von der Lage des Positions-Sollwerts relativ zu dem ersten und zweiten Positions-Rasterwert verändert wird. Der Kupplungsaktor kann dann auf einfache Weise mit Hilfe eines Mikrocomputers angesteuert werden, wobei der Mikrocomputer die Positions-Sollwerte in einem festen Zeittakt ermitteln kann.

Bei einer anderen Ausführungsform der Erfindung wird das Überlagerungssignal mit konstanter Pulsdauer pulsweitenmoduliert, wobei die Pausendauer in Abhängigkeit von der Lage des Positions-Sollwerts relativ zu dem ersten und zweiten Positions-Rasterwert verändert wird. Die Pulse können dann mit fester Pulsdauer auf einfache Weise hardwaremäßig generiert werden.

Selbstverständlich ist es aber auch möglich, dass das Überlagerungssignal mit konstanter Pausendauer pulsweitenmoduliert wird, und dass die Pulsdauer in Abhängigkeit von der Lage des Positions-Sollwerts relativ zu dem ersten und zweiten Positions-Rasterwert verändert wird.

Vorteilhaft ist, wenn der Wechselsignalanteil eine Grundfrequenz aufweist, die zwischen 2 und 8 Hz, gegebenenfalls zwischen 3 und 7 Hz, insbesondere zwischen 4 und 6 Hz liegt und bevorzugt etwa 5 Hz beträgt. Die Grundfrequenz ist dann bei für die Verwendung im Antriebsstrang eines Kraftfahrzeugs üblichen Kupplungen größer als die maximale Verstellfrequenz des Komplettsystems, bestehend aus Kupplungsaktor, Ausrückeinrichtung, Kupplung und Signalverarbeitungseinrichtung und kleiner als die Rupffrequenz des Antriebsstrangs.

Die vorstehend genannte Aufgabe wird auch dadurch gelöst, dass die Kupplung mit Hilfe eines über eine Weghysterese aufweisende Ausrückeinrichtung mit der Kupplung in Antriebsverbindung stehenden Kupplungsaktors verstellt wird, dass ein einem Kupplungsmoment-Sollwert entsprechender Positions-Sollwert ermittelt und der Kupplungsaktor entsprechend dem Positions-Sollwert positioniert wird, und dass der Positionierbewegung des Kupplungsaktors zur zumindest teilweisen Kompensation der Weghysterese eine Zitterbewegung überlagert wird.

Dabei wird - ähnlich wie bei der zuerst genannten Lösung - durch die Zitterbewegung der Kupplungsaktor kurzzeitig bis über den Positions-Sollwert hinaus und dann wieder ein Stück in die entgegengesetzte Richtung positioniert, wobei diese Abfolge von Positionierschritten ggf. ein oder mehrmals wiederholt wird. Durch diese Vorwärts- Rückwärtsbewegung kann eine eventuell vorhandene Weghysterese reduziert oder sogar vollständig beseitigt werden. Somit ermöglicht das Verfahren ein Einstellen des Kupplungsmoments mit großer Präzision.

Vorteilhaft ist, wenn die Amplitude der Zitterbewegung mindestens doppelt so groß ist wie der Maximalwert der Weghysterese. Dabei wird auch im ungünstigsten Fall, wenn der Kupplungsaktor und die Ausrückeinrichtung so positioniert sind, dass ohne die Anwendung der Zitterbewegung die volle Weghysterese zum tragen käme, durch die Zitterbewegung eine vollständige Kompensation der Weghysterese ermöglicht. Bevorzugt wird die Amplitude der Zitterbewegung nur so groß gewählt, dass die Zitterbewegung von den Fahrzeuginsassen nicht bemerkt wird.

Bei einer zweckmäßigen Ausgestaltung des Verfahrens wird ein dem Positions-Sollwert entsprechendes Positions-Sollwertsignal generiert, wobei diesem Positions-Sollwertsignal ein einen Wechselsignalanteil enthaltendes Überlagerungssignal für die Zitterbewegung überlagert wird, und wobei mit dem so gebildeten Signal der Kupplungsaktor angesteuert wird. Die Zitterbewegung kann dadurch auf einfache Weise erzeugt werden.

Vorteilhaft ist, dass der Wechselsignalanteil eine Frequenz aufweist, die größer ist als 25, insbesondre 30 und bevorzugt 35 Hz. Die Frequenz des Wechselsignalanteils ist dann größer als die maximale Verstellfrequenz des Komplettsystems, bestehend aus Kupplungsaktor, Ausrückeinrichtung, Kupplung und Signalverarbeitungseinrichtung, jedoch kleiner als die maximale Verstellfrequenz des Kupplungsaktors.

Nachfolgend sind Ausführungsbeispiele der Erfindung anhand der Zeichnung näher erläutert.

Es zeigen:

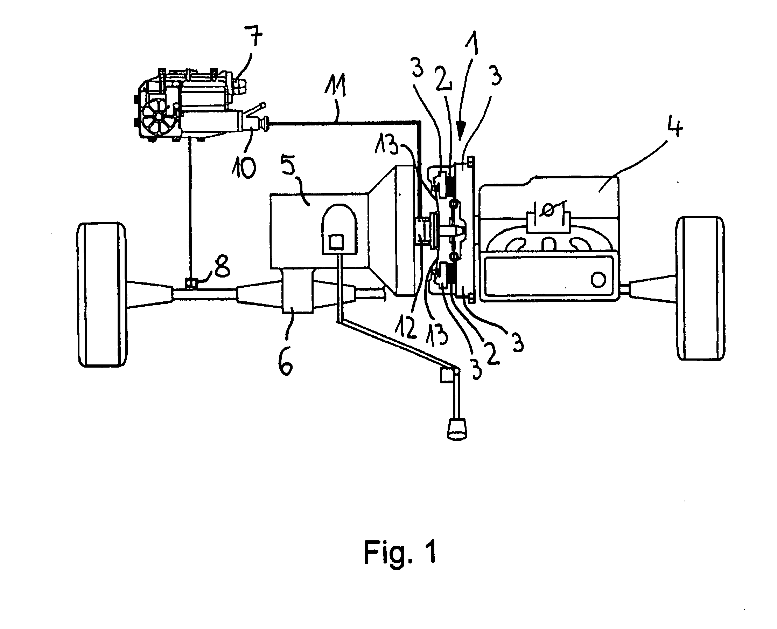

- Fig. 1: einen Antriebsstrang eines Kraftfahrzeugs,

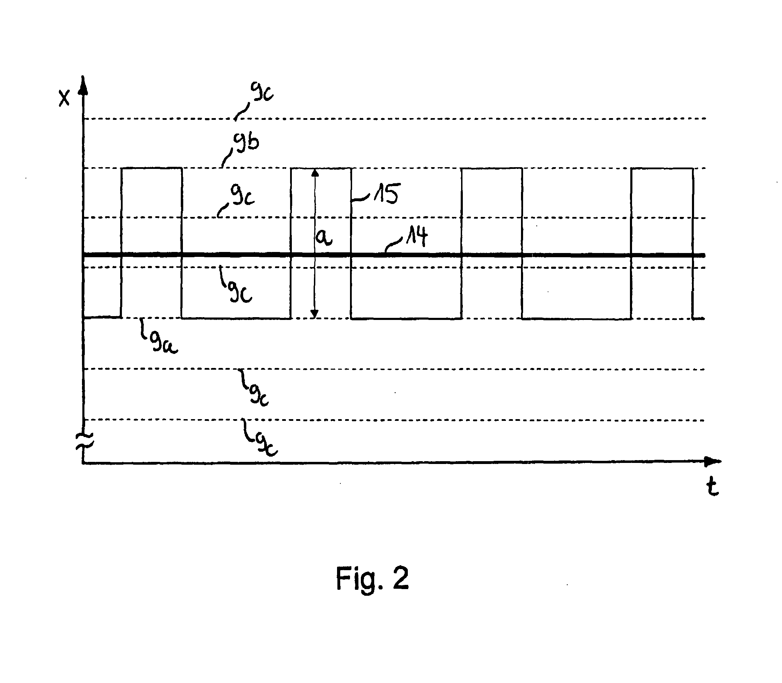

- Fig. 2: eine graphische Darstellung der Relativposition zweier Aktorteile eines Kupplungsaktors, wobei auf der Abszisse die Zeit t und auf der Ordinate die Position x dargestellt ist, und wobei strichliniert Rasterwerte eines Positionsrasters markiert sind, in dem die Aktorteile relativ zueinander positionierbar sind,

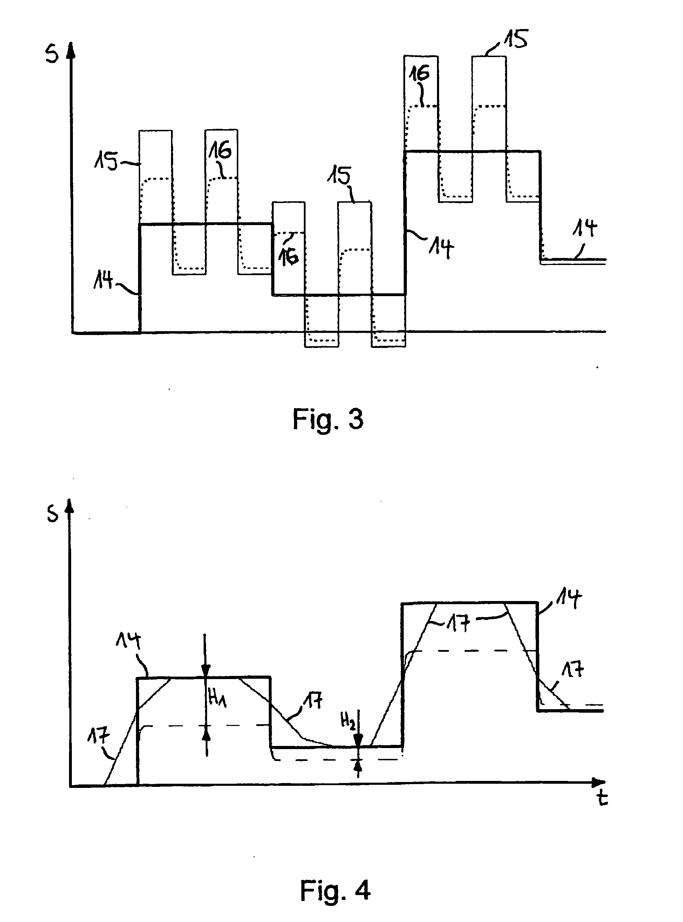

- Fig. 3: eine graphische Darstellung der Relativposition zweier Kupplungsteile einer Nass- oder Trockenkupplung, wobei auf der Abszisse die Zeit t und auf der Ordinate die Position s dargestellt sind, wobei der Sollwert der Relativposition als durchgezogene dicke Linie, ein mit einer Zitterbewegung überlagerter Sollwert als durchgezogene dünne und der Istwert der Relativposition als punktierte Linie dargestellt sind, und
- Fig. 4: eine graphische Darstellung der Relativposition zweier Kupplungsteile einer Nass- oder Trockenkupplung, wobei auf der Abszisse die Zeit t und auf der Ordinate die Position s dargestellt ist, wobei der Sollwert der Relativposition als durchgezogene dicke Linie, ein gemittelter Istwert der Relativposition als durchgezogene dünne Linie und der Istwert der Relativposition, wie er ohne die Zitterbewegung wäre, als strichlinierte Linie dargestellt sind.

Eine in einem in Fig. 1 schematisch dargestellten Antriebsstrang eines Kraftfahrzeugs angeordnete Kupplungseinrichtung weist eine Kupplung 1 auf, die als Kupplungsteile eine Kupplungsscheibe 2 mit einem Reibbelag und zwei beidseits der Kupplungsscheibe 2 angeordnete Druckelemente 3 hat, die mit Hilfe einer Ausrückeinrichtung aufeinander zu- und voneinander wegbewegbar sind. Die Druckelemente 3 sind mit der Welle eines Verbrennungsmotors 4 und die Kupplungsscheibe 2 ist mit der Antriebswelle eines Schaltgetriebes 5 verbunden. Eine Abtriebswelle des Schaltgetriebes 5 steht über ein Differential 6 mit den Antriebsrädern des Kraftfahrzeugs in Antriebsverbindung.

Die Betätigungseinrichtung weist einen Kupplungsaktor 7 auf, der als EC-Motor ausgebildet ist. Der Kupplungsaktor 7 hat als Aktorteile einen Stator mit einer Wicklung und einen drehbar an dem Stator gelagerten Läufer, der an seinem Umfang eine Folge von permanentmagnetischen Magnetsegmenten hat, die abwechselnd in zueinander entgegengesetzte Richtungen magnetisiert sind und mit dem Stator über einen Luftspalt magnetisch zusammenwirken. Zum Positionieren des Läufers relativ zu dem Stator ist die Wicklung des Kupplungsaktors 7 über eine Endstufe mit einer Steuereinrichtung verbunden. Als Lagesensoren sind am Stator mehrere in Umfangsrichtung zueinander versetzte, in der Zeichnung nicht näher dargestellte Magnetfeldsensoren vorgesehen, die mit den Magnetsegmenten des Läufers zusammenwirken. Zur inkrementalen Messung der Relativposition zwischen dem Läufer und dem Stator und zur Steuerung der Kommutierung der Wicklung in Abhängigkeit von der gemessenen Relativposition sind die Magnetfeldsensoren mit Messsignaleingängen der Steuereinrichtung verbunden. An der Steuereinrichtung ist außerdem mindestens ein Raddrehzahlsensor 8 angeschlossen.

Der Läufer weist bestimmte Vorzugstellungen auf, die ein Positionsraster definieren. In stromlosem Zustand nimmt die Läuferposition jeweils einen der Rasterwerte 9a, 9b, 9c des Positionsrasters ein, von denen einige in Fig. 2 strichliniert markiert sind. Wenn der Läufer zwischen zwei Rasterwerten 9a, 9b, 9c positioniert wird, tritt zwischen dem Läufer und dem Stator ein Rastmoment auf, das dadurch verursacht ist, dass die Magnetsegmente des Läufers mit an dem Stator angeordneten Zähnen über den Luftspalt magnetisch zusammenwirken. Durch Bestromen der Wicklung kann der Läufer an jedem der Rasterwerte des Positionsrasters positioniert werden.

In Fig. 1 ist erkennbar, dass der Kupplungsaktor 7 über eine Ausrückeinrichtung mit der Kupplung 1 in Antriebsverbindung steht. Die Ausrückeinrichtung weist ein von dem Kupplungsaktor 7 angetriebenes Übersetzungsgetriebe auf, das mit einem hydraulischen Geberzylinder 10 in Antriebsverbindung steht, der über eine Hydraulikleitung 11 an einem Nehmerzylinder 12 angeschlossen ist. Der Nehmerzylinder 12 steht zum Einstellen des von der Kupplung 1 übertragenen Drehmoments entgegen der Rückstellkraft einer Membranfeder 13 mit den Druckelementen 3 in Antriebsverbindung.

Mit Hilfe der Steuereinrichtung ist der Läufer an jeder der Rasterwerte des Positionsrasters relativ zu dem Stator positionierbar. Zum Einstellen eines mit Hilfe der Steuereinrichtung ermittelten, über die Kupplung 1 von der Welle des Verbrennungsmotors 4 auf die Antriebswelle des Schaltgetriebes 5 zu übertragenden Kupplungsmoment-Sollwerts wird zunächst in der Steuereinrichtung ein Positions-Sollwert ermittelt. Das entsprechende Positions-Sollwertsignal ist in Fig. 2 mit 14 bezeichnet. Wenn der Positions-Sollwert mit einem der Rasterwerte 9a, 9b, 9c des Positionsrasters übereinstimmt, wird der Kupplungsaktor an dem entsprechenden Rasterwert 9a, 9b, 9c positioniert.

Wenn der Positions-Sollwert dagegen mit keinem der Rasterwerte 9 des Positionsrasters übereinstimmt, werden mindestens ein erster Rasterwert 9a und zumindest ein zweiter Rasterwert 9b ermittelt, die den Positions-Sollwert zwischen sich einschließen. Dann werden die Aktorteile für die Dauer, während der das entsprechende Kupplungsmoment eingestellt werden soll, derart abwechselnd an dem ersten Positions-Rasterwert 9a und dem zweiten Positions-Rasterwert 9b positioniert, dass das mittlere Kupplungsmoment mit dem Kupplungsmoment-Sollwert übereinstimmt.

In Fig. 2 ist erkennbar, dass dazu dem Positions-Sollwertsignal 14 ein einen Wechselsignalanteil enthaltendes, pulsweitenmoduliertes Überlagerungssignal derart überlagert wird, dass das Summensignal 15 aus dem Positions-Sollwertsignal 14 und dem Überlagerungssignal zwischen seinen Flanken in dem Positionsraster liegt. In Fig. 2 ist die Amplitude des Wechselsignalanteils mit a bezeichnet. Entsprechend dem auf diese Weise erhaltenen Summensignals 15 wird der Kupplungsaktor 7 positioniert.

In Fig. 2 ist erkennbar, dass das Puls-Pausen-Verhältnis und die Rasterwerte 9a, 9b derart aufeinander abgestimmt sind, dass das Integral des Summensignals 15 über die Periodendauer des Wechselsignalanteils mit dem entsprechenden Integral des Positions-Sollwertsignals 14 übereinstimmt.

Die Grundfrequenz des Wechselsignalanteils ist soweit von der Rupffrequenz des Antriebsstrangs beabstandet, dass durch den Wechselsignalanteil keine Eigenfrequenzen in dem Antriebsstrang angeregt werden. Die Grundfrequenz liegt außerdem zwischen der maximalen Verstellfrequenz des Komplettsystems, bestehend aus dem Kupplungsaktor 7, der Ausrückeinrichtung der Kupplung 1 und der Steuereinrichtung und der maximalen Verstellfrequenz des Kupplungsaktors.

Bei dem in Fig. 3 und 4 gezeigten Ausführungsbeispiel weist die Ausrückeinrichtung eine Weghysterese auf. In Fig. 4 ist erkennbar, dass sich beim Positionieren des Kupplungsaktors 7 entsprechend einem mit 14 bezeichneten, Sprünge aufweisenden Positions-Sollwertsignal aufgrund der Hysterese-Abweichungen H₁, H₂ zwischen dem Positions-Sollwertsignal 14 und der tatsächlichen, strichliniert dargestellten Relativposition der Kupplungsteile ergeben würde. Dabei wäre diese Abweichung von dem zeitlichen Verlauf der Relativposition der Aktorteile in der Vergangenheit abhängig. Deutlich ist erkennbar, dass die Weghysterese während der Positionierung nacheinander unterschiedliche Weghysteresewerte H₁, H₂ annimmt. In Fig. 3 wird zur Vereinfachung davon ausgegangen, dass das Übersetzungsverhältnis zwischen dem Positionierweg des Kupplungsaktors 7 und dem Positionierweg der Druckelemente 3 der Kupplung 1 gleich eins ist. Tatsächlich weist das Übersetzungsverhältnis jedoch einen Wert auf, der größer als eins ist, d.h. der Positionierweg des Kupplungsaktors 7 wird mit Hilfe der Ausrückeinrichtung in einen kleineren Positionierweg der Kupplung 1 übersetzt.

Um die Weghysterese zumindest teilweise zu kompensieren oder sogar völlig zu vermeiden, wird dem Positionierbewegung des Kupplungsaktors 7 eine Zitterbewegung überlagert. Dazu wird dem Positions-Sollwertsignal 14 ein einen Wechselsignalanteil enthaltendes, pulsweitenmoduliertes Überlagerungssignal überlagert, dessen Amplitude mindestens doppelt so groß ist, wie der Maximalwert der Weghysterese. Das Puls-Pausen-Verhältnis der Pulsweitenmodulation beträgt etwa 50%. In Fig. 3 ist erkennbar, dass der Istwertverlauf 16 der Relativposition der Druckelemente 3 zwar aufgrund der Hysterese von dem aus dem Positions-Sollwertsignal 14 und dem Überlagerungssignal gebildeten Summensignal 15 abweicht, dass aber der über die Periodendauer des Überlagerungssignals gemittelte Mittelwert 17 des Summensignals 15 (Fig. 4) relativ gut mit dem Positions-Sollwertsignal 14 übereinstimmt.

Die Grundfrequenz des Wechselsignalanteils ist bei dem Ausführungsbeispiel nach Fig. 3 und 4 größer als die maximale Verstellfrequenz des Komplettsystems, bestehend aus Kupplungsaktor, Ausrückeinrichtung, Kupplung 1 und Steuereinrichtung, jedoch kleiner als die maximale Verstellfrequenz des Kupplungsaktors.

### Bezugszeichenliste

- 1: Kupplung
- 2: Kupplungsscheibe
- 3: Druckelement
- 4: Verbrennungsmotor
- 5: Schaltgetriebe
- 6: Differential
- 7: Kupplungsaktor
- 8: Raddrehzahlsensor
- 9a: erster Rasterwert
- 9b: zweiter Rasterwert
- 9c: Rasterwert
- 10: Geberzylinder
- 11: Hydraulikleitung
- 12: Nehmerzylinder
- 13: Membranfeder
- 14: Positions-Sollwertsignal
- 15: Summensignal
- 16: Istwertverlauf
- 17: Mittelwert des Summensignals
- a: Amplitude des Wechselsignalanteils
- H₁: Weghysteresewert
- H₂: Weghysteresewert

## Patentansprüche

1. Verfahren zum Einstellen des Kupplungsmoments einer in einem Antriebsstrang eines Kraftfahrzeugs angeordneten Kupplung (1), wobei die Kupplung (1) mit Hilfe eines über eine eine Weghysterese aufweisende Ausrückeinrichtung mit der Kupplung (1) in Antriebsverbindung stehenden Kupplungsaktors (7) verstellt wird, und wobei ein einem Kupplungsmoment-Sollwert entsprechender Positions-Sollwert ermittelt und der Kupplungsaktor (7) entsprechend dem Positions-Sollwert positioniert wird, wobei der Positionierbewegung des Kupplungsaktors (7) zur zumindest teilweisen Kompensation der Weghysterese eine Zitterbewegung überlagert wird, **dadurch gekennzeichnet, dass** ein dem Positions-Sollwert entsprechendes Positions-Sollwertsignal (14) generiert wird, dass diesem Positions-Sollwertsignal (14) ein einen Wechselsignalanteil enthaltendes Überlagerungssignal für die Zitterbewegung überlagert wird, und dass mit dem so gebildeten Signal der Kupplungsaktor (7) angesteuert wird, wobei der Wechselsignalanteil eine Frequenz aufweist, die größer als die Rupffrequenz ist.

2. Verfahren nach Anspruch 1, **dadurch gekennzeichnet, dass** die Amplitude der Zitterbewegung mindestens doppelt so groß ist wie der Maximalwert der Weghysterese.

3. Verfahren nach Anspruch 1, **dadurch gekennzeichnet, dass** die Frequenz größer als 25, insbesondere 30 und bevorzugt 35 Hz ist.

## Claims

1. Method for setting the clutch torque of a clutch (1) which is arranged in a drive train of a motor vehicle, wherein the clutch (1) is adjusted using a clutch actuator (7) which has a drive connection to the clutch (1) via a declutching device which has a travel hysteresis, and wherein a position setpoint value which corresponds to a clutch torque setpoint value is determined and the clutch actuator (7) is positioned in accordance with the position setpoint value, wherein a jitter movement is superimposed on the positioning movement of the clutch actuator (7) in order to at least partially compensate for the travel hysteresis, **characterized in that** a position setpoint value signal (14) which corresponds to the position setpoint value is generated, **in that** a superimposition signal, containing a changing signal component, for the jitter movement is superimposed on this position setpoint value signal (14), and **in that** the clutch actuator (7) is actuated with the signal which is formed in this way, wherein the changing signal component has a frequency which is higher than the grabbing frequency.

2. Method according to Claim 1, **characterized in that** the amplitude of the jitter movement is at least twice as large as the maximum value of the travel hysteresis.

3. Method according to Claim 1, **characterized in that** the frequency is higher than 25, in particular 30, and preferably 35 Hz.

## Revendications

1. Procédé de réglage du couple d'embrayage d'un embrayage (1) disposé dans le train d'entraînement d'un véhicule automobile, l'embrayage (1) étant réglé à l'aide d'un actionneur d'embrayage (7) relié à entraînement à l'embrayage (1) à l'aide d'un dispositif de recul qui présente une hystérésis de déplacement, une valeur de consigne de position qui correspond à une valeur de consigne du couple d'embrayage étant déterminée et l'actionneur d'embrayage (7) étant positionné en correspondance à la position de consigne de position, un déplacement de vibration étant superposé au déplacement de positionnement de l'actionneur d'embrayage (7) pour compenser au moins en partie l'hystérésis de déplacement,
**caractérisé en ce que**
un signal (14) de valeur de consigne de position qui correspond à la valeur de consigne de position est formé en superposant un signal superposé de déplacement de vibration, qui contient une partie alternative, à ce signal (14) de valeur de consigne de position et en commandant l'actionneur d'embrayage (7) à l'aide du signal ainsi formé, la partie alternative du signal ayant une fréquence supérieure à la fréquence de vibration.

2. Procédé selon la revendication 1, **caractérisé en ce que** l'amplitude du déplacement de vibration représente au moins le double de la valeur maximale de l'hystérésis de déplacement.

3. Procédé selon la revendication 1, **caractérisé en ce que** la fréquence est supérieure à 25 Hz, en particulier à 30 Hz et est de préférence de 35 Hz.
